## Europäisches Patentamt
## European Patent Office
## Office européen des brevets

(19)

(11) Numéro de publication: **0 227 525 B1**

(12)

# FASCICULE DE BREVET EUROPEEN

(45) Date de publication du fascicule du brevet:
14.06.89

(51) Int. Cl.⁴: **B65D 6/32**, B23K 5/16

(21) Numéro de dépôt: **86402579.6**

(22) Date de dépôt: **20.11.86**

(54) Récipients composites métalloplastiques assemblés par soudure.

(30) Priorité: **26.11.85 FR 8517475**

(43) Date de publication de la demande:
**01.07.87 Bulletin 87/27**

(45) Mention de la délivrance du brevet:
**14.06.89 Bulletin 89/24**

(84) Etats contractants désignés:
**AT BE CH DE ES FR GB GR IT LI LU NL SE**

(56) Documents cités:
**CH-A- 217 555**
**DE-B- 1 102 707**
**DE-C- 723 747**
**FR-A- 869 239**
**FR-A- 1 118 100**
**US-A- 2 343 315**
**US-A- 3 115 987**

(73) Titulaire: **ATOCHEM, 4 & 8, Cours Michelet La Défense 10, F-92800 Puteaux(FR)**

(72) Inventeur: **Lescaut, Pierre Louis, Vieille Sente du Mascrier, F-27300 Bernay(FR)**

(74) Mandataire: **Rochet, Michel et al, ATOCHEM Département Propriété Industrielle La Défense 10 4 & 8 Cours Michelet, F-92800 Puteaux(FR)**

ACTORUM AG

## Description

La présente invention se situe dans le domaine de l'assemblage par soudure autogène de récipients constitués d'au moins deux pièces du type des réservoirs ou des réacteurs utilisés par les industries chimiques, alimentaires agrochimiques, pharmaceutiques etc.

Les fluides transportés ou traités dans ces récipients s'entendent de la façon la plus générale tels que: solutions aqueuses, organiques, lessives chimiques, suspensions ou émulsions etc.

Les récipients adaptés à ces transports ou traitements sont généralement en acier et reçoivent habituellement des revêtements protecteurs tels que ciment verré, émaux ou vernis cuits au four tels que vernis à base de résines époxy ou polyuréthannes etc. Ils peuvent également être réalisés en acier inox et sont alors dépourvus de revêtement.

Les récipients en question sont limités dans leur forme étant donné que la susceptibilité thermique des revêtements cités plus haut interdit qu'ils soient fabriqués en plusieurs pièces et assemblés par soudure autogène des pièces constituants en acier. Par ailleurs les récipients par chaudronnerie à partir de feuilles d'acier inox sont très onéreux.

Dans le document allemand DE-B 1 102 707 on a décrit des récipients métalliques composites correspondant au préambule de la revendication 1 dont les coquilles sond recouvertes d'un revêtement anticorrosion en matière plastique qui vient partiellement chevaucher les extrémités du manchon métallique inoxydable prévu sur les rebords des coquilles.

Le but de la présente invention est de remédier à ces inconvénients et limitations de façon simple.

L'invention concerne un récipient selon le préambule de la revendication 1, caractérisé en ce que les deux coquilles prennent appui l'une sur l'autre le long de replats périphériques plans dont la tranche est chanfreinée, ces replats et leurs tranches chanfreinées étant munis d'une couche métallique inoxydable se prolongeant vers l'intérieur du récipient terminé jusqu'au delà du congé de raccordement du replat et du corps du récipient, le revêtement anti-corrosion étant tel qu'il s'arrête à une distance d'au moins 15 mm de la zone où sera effectuée la soudure autogène et qu'il chevauche la couche métallique sur une longueur d'au moins 10 mm et la soudure autogène étant réalisée par un cordon d'alliage inoxydable de même nature que la couche déposée sur les replats des deux coquilles.

La technique de fabrication de ces récipients comporte une première phase qui consiste à déposer, notamment par schoopage, nom par lequel on entend en technologie l'application au chalumeau oxyacétylénique d'un métal introduit sous forme de fil continu dans le chalumeau, sur les portées planes ou replats des éléments de récipient à assembler, d'un alliage métallique inoxydable constitué de fer et de l'un des métaux du groupe chrome, nickel, cobalt.

Dans une variante du procédé, l'alliage métallique inoxydable est injecté dans le chalumeau sous forme de poudre et contient, outre les métaux cités, du carbure de silicium.

L'épaisseur d'alliage déposé varie suivant les applications de 200 à 600 microns.

Le bord extérieur des replats à assembler est avantageusement chanfreiné suivant un angle compris entre 45 et 60° par rapport au plan d'assemblage.

Non seulement les replats à assembler, mais aussi la tranche chanfreinée de la tôle de l'élément de récipient reçoivent ainsi une métallisation telle que décrite ci-dessus.

Il a été trouvé avantageux de prolonger cette métallisation vers l'intérieur du récipient, au delà du rayon de raccordement du replat et du corps du récipient.

Au cours d'une seconde phase du procédé on dépose sur la paroi intérieure de l'élément de récipient à assembler un revêtement anticorrosion qui peut être constitué de résines thermoplastiques choisies dans le groupe des polyamides, des résines fluorées, des polyéthylènes, de préférence de haut poids moléculaire ou du PVC. Ce revêtement peut également être constitué de résines thermodurcissables choisies dans le groupe des résines époxy ou polyuréthannes.

Ces diverses résines thermoplastiques sont avantageusement mises en oeuvre à partir de poudres fines d'une granulométrie comprise entre 10 et 400 microns et par des procédés connus tels que le pou drage électrostatique, le trempage ou le pistolage. Suivant les cas l'épaisseur de ce revêtement peut varier de 200 microns à 5 mm.

Une réserve est respectée sur le replat des éléments à assembler dans lequel l'alliage métallique inoxydable déposé lors de la première phase reste à nu.

Le revêtement anticorrosion appliqué dans la deuxième phase est tel qu'il doit toujours recouvrir le dépôt métallique inoxydable de façon à assurer la continuité de la protection de l'intérieur du récipient obtenu.

La création de tubulures éventuelles par assemblage de tronçons de cylindre au corps du récipient s'obtient de la même façon, en ayant prévu les ouvertures correspondantes sur le corps du récipient à obtenir.

On respectera chaque fois le principe du recouvrement du revêtement métallique inoxydable par le revêtement thermoplastique anticorrosion. Pour des raisons de sécurité et de tolérances de fabrication industrielle, la zone de recouvrement (où les deux revêtements se chevauchent) ne doit pas être inférieure à 10 mm.

On compendra mieux la disposition relative des couches des deux revêtements à l'aide des figures jointes à la présente description.

La figure 1 représente en coupe un récipient formé de deux coquilles assemblées le long d'un plan de joint plan.

La figure 2 représente une coupe d'un autre type de récipient formé de trois éléments assemblés le long de deux plans de joint distincts.

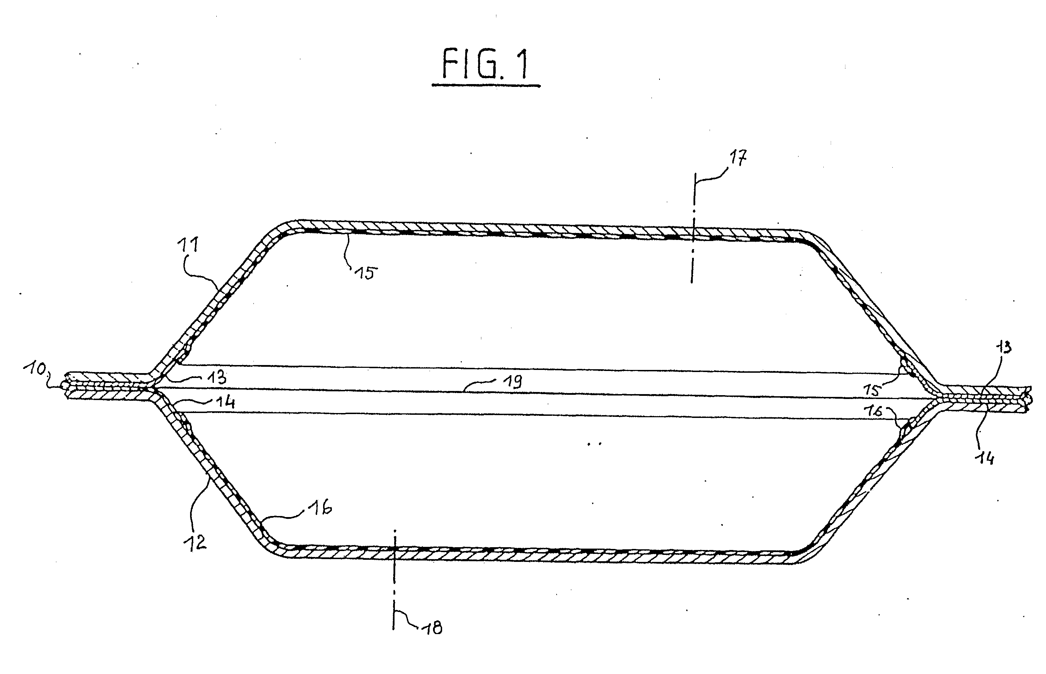

Sur la figure 1, un récipient selon l'invention est constitué de deux coquilles (11) et (12) portant l'une sur l'autre par des replats le long du plan de joint (19). Ces replats reçoivent par schoopage une métallisation à base d'une composition inoxydable sur toutes les surfaces (13), (14) comprenant outre le replat proprement dit, une surface arrondie raccordant le replat à la cavité intérieure de la coquille (11) ou (12).

Une couche de revêtement anticorrosion (15) et (16), à base de résines thermoplastiques choisies dans le groupe des polyamides, des résines fluorées des polyéthylènes ou du PVC, ou de résines thermodurcissables, telles que les résines époxy ou polyuréthannes.

Ces deux familles de résines sont thermosensibles, les premières parce qu'elles fondent à leur température de fusion avant de se décomposer, les secondes parce qu'elles subissent une décomposition.

L'objet de la présente invention est de soustraire le revêtement anticorrosion thermosensible à la décomposition, en l'arrêtant au moins à 15 mm de la zone où l'on procèdera à la soudure autogène des bords des coquilles à assembler.

Cette soudure autogène sera obtenue par fusion d'un cordon (10) en alliage métallique inoxydable de même composition que les couches (13) et (14) déposées sur les replats des coquilles à assembler. Les tranches de la tôle de ces coquilles sont avantageusement chanfreinées vers l'intérieur du récipient terminé d'un angle comprise entre 45 et 60° sur l'horizontale du plan de joint, formant ainsi une gorge pour recevoir le métal du cordon de soudure.

Le récipient terminé devant servir de réservoir il est nécessaire de prévoir des tubulures diverses telles que (17), (18). Le métal de ces tubulures sera métallisé par une composition inoxydable sur sa face intérieure et sa tranche et recevra en outre un revêtement anticorrosion suivant le même principe que celui énoncé plus haut, à savoir que le revêtement anticorrosion thermosensible est interrompu à au moins 15 mm de la tranche à assembler par soudure autogène, et que ce revêtement chevauche la couche métallique inoxydable sur une longueur d'au moins 10 mm.

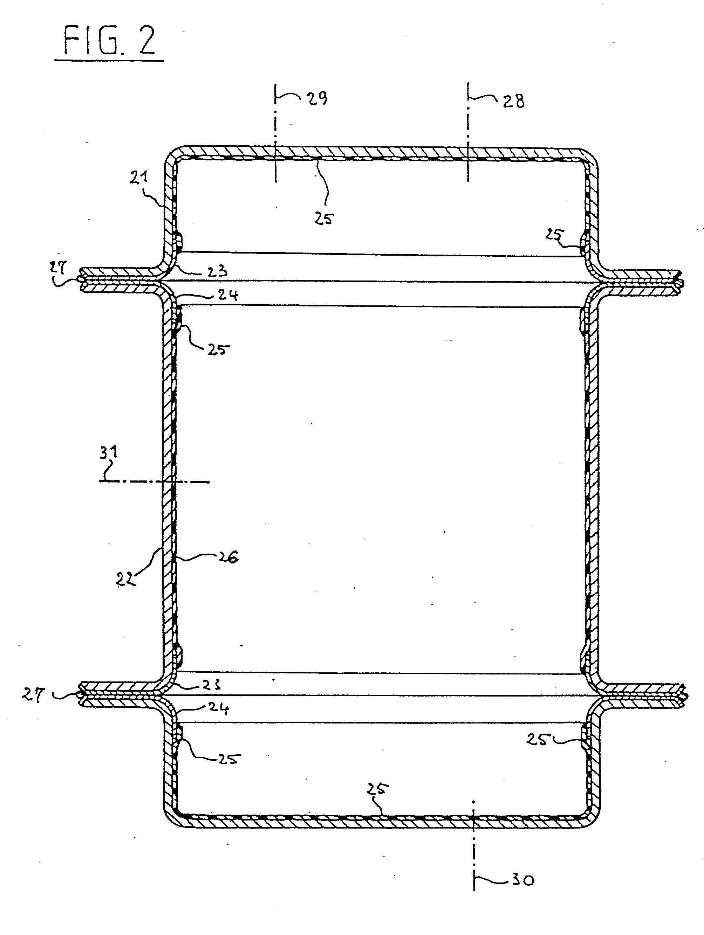

La figure 2 représente une variante du type de récipients susceptibles d'être produits par le même procédé. Le récipient comporte trois éléments constitutifs :
- Deux coquilles (21) semblables aux coquilles de l'exemple précédent, assemblées sur les deux extrémités ouvertes munies de replats d'une virole (22) par soudure autogène à l'aide de cordons métalliques inoxydables (27). Les portées métallisées des divers éléments constitutifs sont (23) et (24).

Les revêtements anticorrosion thermosensibles sont appliqués en couches (25), (26) chevauchant les couches métallisées (23), (24).

Des tubulures de raccordement (28) à (31) peuvent être placés en différents points du récipient terminé en appliquant la même technique que précèdemment.

Les récipients correspondant à la figure 1 peuvent être tous types de réservoirs plats tels que par exemple réservoirs de carburant pour automobiles.

Les récipients correspondant à la figure 2 peuvent être des récipients du type des réacteurs employés en chimie, ou dans les procédés de fabrication pharmaceutiques ou dans les industries alimentaires.

## Revendications

1. Récipient métallique composite constitué de deux coquilles (11, 12) assemblées par soudure, lequel récipient portant un revêtement anticorrosion (15, 16) constitué de résines thermoplastiques ou de résines thermodurcissables, caractérisé en ce que les deux coquilles prennent appui l'une sur l'autre le long de replats périphériques plans dont la tranche est chanfreinée, ces replats et leurs tranches chanfreinées étant munis d'une couche métallique inoxydable (13, 14) se prolongeant vers l'intérieur du récipient terminé jusqu'au delà du congé de raccordement du replat et du corps du récipient, le revêtement anticorrosion étant tel qu'il s'arrête à une distance d'au moins 15 mm de la zone où sera effectuée la soudure autogène et qu'il chevauche la couche métallique sur une longueur d'au moins 10 mm et la soudure autogène étant réalisée par un cordon d'alliage inoxydable (10) de même nature que la couche déposée sur les replats des deux coquilles.

2. Récipient métallique composite constitué de trois éléments caractérisé en ce qu'il comprend deux coquilles selon la revendication 1, reliées par une virole cylindrique ou cylindroconique (22) muni de replats (21) correspondant à ceux des replats des coquilles susmentionnées, la virole étant munie sur ses replats et la tranche de ceux-ci d'une couche métallique inoxydable (23, 24) selon la revendication 1 et le corps de la virole étant muni d'un revêtement anticorrosion (25) selon la revendication 1, ce revêtement observant les mêmes limitations géométriques de retrait par rapport à la zone de soudure et de chevauchement de la couche métallique inoxydable que dans la revendication 1.

3. Récipient métallique composite selon l'une des revendications 1 et 2, caractérisé en ce que la couche métallique inoxydable est constituée d'un alliage de fer et de l'un des métaux du groupe de chrome, nickel, cobalt, additionné éventuellement de carbure de silicium.

4. Récipient métallique composite selon l'une des revendications 1 et 2, caractérisé en ce que la revêtement anticorrosion thermosensible est constitué d'une résine thermoplastique choisie dans le groupe des polyamides, des résines fluorées, des polyéthylènes ou du PVC ou d'une résine thermodurcissable choisie dans le groupe des résines époxy et polyuréthannes.

## Claims

1. Composite metal receptacle consisting of two shells (11, 12) assembled by welding, which receptacle bearing an anticorrosion coating (15, 16) consisting of thermoplastic resins or of thermosetting resins, characterized in that the two shells bear one on the other along plane peripheral flats whose cut face is chamfered, these flats and their chamfered edges being provided with a nonoxidizable metal layer (13, 14) extending towards the interior of the finished receptacle beyond the fillet connecting the flat to the body of the receptacle, the anticorrosion coating being such that it stops at a distance of at least 15 mm from the region where the autogenous welding will be performed and that it overlaps the metal layer over a length of at least 10 mm and the autogenous welding being performed by a strand of nonoxidizable alloy (10) of the same kind as the layer deposited on the flats of the two shells.

2. Composite metal receptacle consisting of three components, characterized in that it comprises two shells according to Claim 1, which are connected by a cylindrical or cylindro-conical sleeve (22) provided with flats (21) corresponding to those of the flats of the abovementioned shells, the sleeve being provided on its flats and on the cut face thereof with a nonoxidizable metal layer (23, 24) according to Claim 1 and the body of the sleeve being provided with an anticorrosion coating (25) according to Claim 1, this coating being subject to the same geometrical limitations of setting back relative to the welding region and of overlapping the nonoxidizable metal layer as in Claim 1.

3. Composite metal receptacle according to either of Claims 1 and 2, characterized in that the nonoxidizable metal layer consists of an alloy of iron and of one of the metals from the group comprising chromium, nickel and cobalt, with the optional addition of silicon carbide.

4. Composite metal receptacle according to either of Claims 1 and 2, characterized in that the heat-sensitive anticorrosion coating consists of a thermoplastic resin chosen from the group of polyamides, fluoro resins, polyethylenes or PVC or of a thermosetting resin chosen from the group of epoxy and polyurethane resins.

**Patentansprüche**

1. Metallischer Verbundbehälter bestehend aus zwei durch Schweißen zusammengefügten Schalen (11, 12), wobei dieser Behälter eine Antikorrosions-Beschichtung (15, 16) bestehend aus thermoplastischen Harzen oder hitzehärtbaren Harzen aufweist, dadurch gekennzeichnet, daß die beiden Schalen sich entlang peripherer, ebener terrassenartiger Absätze, deren Schnittkante angefast ist, gegeneinander abstützen, wobei diese terrassenartigen Absätze und deren angefaste Schnittkanten mit einer metallischen nicht oxydierbaren Schicht (13, 14) versehen sind, die sich ins Innere des fertigen Behälters bis über die Verbindungskehle des terrassenartigen Absatzes und des Behälterkörpers hinaus erstreckt, wobei die Antikorrosions-Beschichtung in einer Entfernung von wenigstens 15 mm von dem Bereich endet, in dem das autogene Schweißen erfolgt und wobei sie die metallische Schicht auf einer Länge von wenigstens 10 mm überlappt und das autogene Schweißen mittels eines Streifens (10) aus einer nicht oxydierbaren Legierung durchgeführt wird, der von gleicher Natur ist wie die auf die terrassenartigen Absätze der beiden Schalen aufgebrachte Schicht.

2. Metallischer Verbundbehälter bestehend aus drei Elementen, dadurch gekennzeichnet, daß er zwei Schalen gemäß Anspruch 1 aufweist, die durch einen zylindrischen oder zylindrisch-konischen Ring (22) verbunden sind, der mit terrassenartigen Absätzen (21) ausgestattet ist, die denjenigen der terrassenartigen Absätze der oben genannten Schalen entsprechen, wobei der Ring an seinen terrassenartigen Absätzen und seiner Schnittkante mit einer nicht oxydierbaren metallischen Schicht (23, 24) gemäß Anspruch 1 versehen ist und der Körper des Rings mit einer Antikorrosions-Beschichtung (25) gemäß Anspruch 1 versehen ist, wobei diese Beschichtung den gleichen geometrischen Beschränkungen hinsichtlich des Abstands bezüglich der Schweißzone und hinsichtlich der Überlappung der nicht oxydierbaren metallischen Schicht genügt wie in Anspruch 1 angegeben ist.

3. Metallischer Verbundbehälter nach einem der Ansprüche 1 und 2, dadurch gekennzeichnet, daß die nicht oxydierbare metallische Schicht aus einer Legierung von Eisen und einem der Metalle der Gruppe Chrom, Nickel, Kobalt besteht, gegebenenfalls unter Zusatz von Siliciumcarbid.

4. Metallischer Verbundbehälter gemäß einem der Ansprüche 1 und 2, dadurch gekennzeichnet, daß die wärmeempfindliche Antikorrosions-Beschichtung aus einem thermoplastischen Harz ausgewählt aus der Gruppe der Polyamide, der fluorierten Harze, der Polyethylene oder PVC oder einem wärmehärtbaren Harz ausgewählt aus der Gruppe der Epoxyharze und der Polyurethane besteht.

# FIG. 1

EP 0 227 525 B1

## FIG. 2